# DEMANDE DE BREVET EUROPEEN

(11) **EP 4 796 378 A1**
(43) Date de publication de la demande: **26.08.2026**
(21) Numéro de dépôt: 26158995.6
(22) Date de dépôt: 17.02.2026
(51) Int. Cl.: B60L 53/63, B60L 53/66, B60L 53/67

(54) **STATION DE RECHARGE POUR PLUSIEURS VÉHICULES ÉLECTRIQUES**

(30) Priorité: 20.02.2025 FR 2501777
(71) Demandeur: Sagemcom Energy & Telecom SAS, 92270 Bois-Colombes (FR)
(72) Inventeur: TEBOULLE, Henri, 92270 BOIS-COLOMBES (FR); ROTER, Ziv, 92270 BOIS-COLOMBES (FR)
(74) Mandataire: Cabinet Le Guen Maillet

(57) **Abrégé**

Une station de recharge de véhicules électriques permet de recharger plusieurs véhicules électriques. La station de recharge de véhicules électriques comportant de la circuiterie électronique configurée pour : obtenir, auprès d'un compteur électrique intelligent en amont, des plages horaires associées respectivement à des scores d'impact de charge ; interroger les véhicules électriques sur leur niveau de charge et leur courant de charge ; obtenir une saisie utilisateur d'un objectif de charge pour chacun des véhicules électriques ; calculer des durées de charge, pour chaque véhicule électrique, pour chaque plage horaire possible au regard des objectifs de charge des véhicules électriques, de sorte à minimiser un score total d'impact de charge de la recharge des véhicules électriques pour atteindre les objectifs de charge.

## Description

### DOMAINE TECHNIQUE

La présente invention concerne une station de recharge pour plusieurs véhicules électriques, et notamment la gestion de recharge desdits véhicules électriques par la station de recharge.

### ETAT DE LA TECHNIQUE ANTERIEURE

Il est connu des stations de recharge de véhicule électrique EVCS (« Electric Vehicle Charging Station » en anglais), notamment destinées à être installées à domicile ou dans des entreprises.

Les stations de recharge de véhicule électrique EVCS actuelles ne disposent que d'une prise de type T2 et ne sont donc pas aptes à charger plusieurs véhicules électriques connectés simultanément.

Il est connu le document de brevet EP 4 454 932 A1 qui divulgue un système permettant de charger deux véhicules électriques toujours à 100% via un boîtier externe émulant, vu de chacun des deux véhicules électriques, une interface de type T2. Cependant, ce système ne tient pas compte que le réseau électrique peut subir des sollicitations plus importantes à certains moments et qu'il est souhaitable d'éviter les surcroits de sollicitations sur le réseau électrique.

### EXPOSE DE L'INVENTION

Il est proposé ici un procédé de gestion de recharge de plusieurs véhicules électriques exécuté par une station de recharge de véhicules électriques connectée en aval d'un compteur électrique intelligent, la station de recharge de véhicules électriques comportant :
- une interface de communication avec le compteur électrique intelligent ;
- une interface de communication avec les véhicules électriques ;
- une interface homme machine ;
le procédé étant tel que la station de recharge de véhicules électriques effectue les étapes suivantes :
- obtention, auprès du compteur électrique intelligent, de plages horaires associées respectivement à des scores d'impact de charge, chaque score d'impact de charge étant représentatif d'un impact de consommation électrique pendant la plage horaire en question ;
- identification des véhicules électriques connectés ;
- interrogation du niveau de charge et du courant de charge des véhicules électriques identifiés ;
- obtention d'une saisie utilisateur, par l'interface homme machine, d'un objectif de charge pour chacun des véhicules électriques identifiés, l'objectif de charge étant représentatif d'un niveau de charge à atteindre à un horaire cible ;
- obtention d'une heure courante ;
- calcul d'une durée totale de charge requise, pour chaque véhicule électrique identifié, pour atteindre le niveau de charge à atteindre et du courant de charge du véhicule électrique en question ;
- suppression, pour chaque véhicule électrique identifié, de chaque plage horaire inapplicable d'après l'heure courante et de l'horaire cible pour le véhicule électrique en question ;
- calculs de durées de charge, pour chaque véhicule électrique identifié, pour chaque plage horaire restante, de sorte à minimiser un score total d'impact de charge de la recharge des véhicules électriques identifiés pour atteindre les objectifs de charge ;
- commande de recharge des véhicules électriques selon une planification définie par lesdits calculs de durées de charge.

Ainsi, en tenant compte du score d'impact de charge associé aux plages horaires dans la planification de la recharge desdits plusieurs véhicules électriques, les surcroits de sollicitations sur le réseau électrique sont évités tout en respectant les objectifs de charge définis pour chacun des véhicules électriques.

Selon un mode de réalisation particulier, la station de recharge de véhicules électriques obtient une information indiquant si les recharges simultanées sont autorisées ou pas, et lesdits calculs des durées de charge, pour chaque véhicule électrique identifié, pour chaque plage horaire restante, tiennent compte de l'information indiquant si les recharges simultanées sont autorisées ou pas.

Selon un mode de réalisation particulier, l'information indiquant si les recharges simultanées sont autorisées ou pas est obtenue par saisie utilisateur par l'interface homme machine.

Selon un mode de réalisation particulier, lorsque les recharges simultanées sont autorisées, la station de recharge de véhicules électriques effectue les étapes suivantes :
- calculer en premier lieu des durées de charge, pour chaque plage horaire et pour chaque véhicule électrique identifié, en évitant la recharge simultanée desdits véhicules électriques ;
- si les objectifs de charge peuvent ainsi être atteints, et si le score total d'impact de charge résultant convient à l'utilisateur, recharger les véhicules électriques sans recouvrement de leurs périodes de charge ;
- sinon, calculer les durées de charge, pour chaque plage horaire et pour chaque véhicule électrique identifié, en autorisant la recharge simultanée desdits véhicules électriques.

Selon un mode de réalisation particulier, pour des recharges simultanées non autorisées, la station de recharge de véhicules électriques calcule les durées de charge *XiTj,* pour chaque véhicule électrique *i,* et pour chaque plage horaire *Tj,* en tenant compte que la somme des durées de charge *XiTj,* avec *i=1,..,n,* pour tout *j=1,...,m,* n'excède pas la durée *DTj* de la plage horaire *Tj* en question, soit : ${\sum }_{i = 1}^{n} XiTj \leq DTj , pour tout j = 1 , … , m$
en maximisant l'expression suivante, pour chaque plage horaire *Tj,* en prenant les plages horaires dans leur ordre croissant de score d'impact de charge *STj :* ${\sum }_{i = 1}^{n} \left(XiTj\times Ii\right)$
avec *XiTj* ≤ min(*XiTjₘₐₓ*; *Di)* sans recouvrement des périodes de charge,
où *Ii* représente le courant de charge du véhicule électrique *i,*
où *XiTjₘₐₓ* est la durée maximale de charge pour le véhicule électrique *i* pendant la plage horaire *Tj,* avec *XiTjₘₐₓ =* 0 pour chaque plage horaire inapplicable pour le véhicule électrique *i,* et sinon *XiTjₘₐₓ* = min *(Di ; DTj)* sinon,
et où *Di* est ladite durée totale de charge requise pour le véhicule électrique *i.*

Selon un mode de réalisation particulier, pour des recharges simultanées non autorisées, la station de recharge de véhicules électriques calcule les durées de charge *XiTj,* pour chaque véhicule électrique *i,* et pour chaque plage horaire *Tj,* en tenant compte que la somme des durées de charge *XiTj,* avec *i=1,..,n,* pour tout *j=1, ...,m,* n'excède pas la durée *DTj* de la plage horaire *Tj* en question, soit : ${\sum }_{i = 1}^{n} XiTj \leq DTj , pour tout j = 1 , … , m$
en maximisant l'expression suivante, pour chaque plage horaire *Tj,* en prenant les plages horaires dans leur ordre croissant de score d'impact de charge *STj :* ${\sum }_{i = 1}^{n} \left(XiTj\times Ii\right)$
avec *XiTj* ≤ min(*XiTjₘₐₓ*; *Di)* sans recouvrement des périodes de charge,
où *Ii* représente le courant de charge du véhicule électrique *i,*
où *XiTjₘₐₓ* est la durée maximale de charge pour le véhicule électrique *i* pendant la plage horaire *Tj,* avec *XiTjₘₐₓ =* 0 pour chaque plage horaire inapplicable pour le véhicule électrique *i,* et sinon *XiTjₘₐₓ* = min *(Di ; DTj_i)* sinon,
où *Di* est ladite durée totale de charge requise pour le véhicule électrique *i,*
et où *DTj_i* est la durée maximale dans la plage horaire *Tj* pendant laquelle le véhicule électrique *i* peut être chargé.

Selon un mode de réalisation particulier, pour des recharges simultanées autorisées, la station de recharge de véhicules électriques calcule les durées de charge *XiTj,* pour chaque véhicule électrique *i*, de sorte que $XiTj = min \left({XiTj}_{max};{D}_{i}-{\sum }_{k \ STk < STj} XiTk\right)$
où *XiTjₘₐₓ* est la durée maximale de charge pour le véhicule électrique *i* pendant la plage horaire *Tj,* avec *XiTjₘₐₓ =* 0 pour chaque plage horaire inapplicable pour le véhicule électrique *i,* et sinon *XiTjₘₐₓ* = min *(Di ; DTj)* sinon,
où *DTj* est la durée de la plage horaire *Tj* et *Di* est ladite durée totale de charge requise pour le véhicule électrique *i*,
et où *k* \ *STk* < *STj* signifie *k* tel que *STk < STj,* où *STj* représente le score d'impact de charge associé à la plage horaire *Tj.*

Selon un mode de réalisation particulier, pour des recharges simultanées autorisées, la station de recharge de véhicules électriques (122) calcule les durées de charge *XiTj,* pour chaque véhicule électrique *i*, de sorte que $XiTj = min \left({XiTj}_{max};{D}_{i}-{\sum }_{k \ STk < STj} XiTk\right)$
où *XiTjₘₐₓ* est la durée maximale de charge pour le véhicule électrique *i* pendant la plage horaire *Tj,* avec *XiTjₘₐₓ =* 0 pour chaque plage horaire inapplicable pour le véhicule électrique *i,* et sinon *XiTjₘₐₓ* = min (*Di ; DTj_i*) sinon,
où *Di* est ladite durée totale de charge requise pour le véhicule électrique *i,*
où *DTj_i* est la durée maximale dans la plage horaire *Tj* pendant laquelle le véhicule électrique *i* peut être chargé,
et où *k* \ *STk* < *STj* signifie *k* tel que *STk < STj,* où *STj* représente le score d'impact de charge associé à la plage horaire *Tj.*

Selon un mode de réalisation particulier, la station de recharge de véhicules électriques comportant un shunt sur chaque phase destinée à alimenter électriquement un connecteur électrique sur lequel est branché un dit véhicule électrique, la station de recharge de véhicules électriques assure par mesure de consommation électrique grâce au shunt que la recharge du véhicule électrique concerné est effectivement en cours lorsque la recharge est souhaitée et remonte une alarme utilisateur dans le cas contraire.

Il est également proposé ici un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de ses modes de réalisation, lorsque lesdites instructions sont exécutées par le processeur. L'invention concerne également un support de stockage d'informations stockant de telles instructions entraînant l'exécution, par le processeur, du procédé évoqué ci-dessus selon l'un quelconque de ses modes de réalisation, lorsque lesdites instructions sont lues (depuis le support de stockage et exécutées par le processeur).

Il est également proposé ici une station de recharge de véhicules électriques qui est configurée pour recharger plusieurs véhicules électriques et qui est destinée à être connectée en aval d'un compteur électrique intelligent, la station de recharge de véhicules électriques comportant :
- une interface de communication avec le compteur électrique intelligent ;
- une interface de communication avec les véhicules électriques ;
- une interface homme machine ;
la station de recharge de véhicules électriques comportant de la circuiterie électronique configurée pour effectuer les étapes suivantes :
- obtention, auprès du compteur électrique intelligent, de plages horaires associées respectivement à des scores d'impact de charge, chaque score d'impact de charge étant représentatif d'un impact de consommation électrique pendant la plage horaire en question ;
- identification des véhicules électriques connectés ;
- interrogation du niveau de charge et du courant de charge des véhicules électriques identifiés ;
- obtention d'une saisie utilisateur, par l'interface homme machine, d'un objectif de charge pour chacun des véhicules électriques identifiés, l'objectif de charge étant représentatif d'un niveau de charge à atteindre à un horaire cible ;
- obtention d'une heure courante ;
- calcul d'une durée totale de charge requise, pour chaque véhicule électrique identifié, pour atteindre le niveau de charge à atteindre et du courant de charge du véhicule électrique en question ;
- suppression, pour chaque véhicule électrique identifié, de chaque plage horaire inapplicable d'après l'heure courante et de l'horaire cible pour le véhicule électrique en question ;
- calculs de durées de charge, pour chaque véhicule électrique identifié, pour chaque plage horaire restante, de sorte à minimiser un score total d'impact de charge de la recharge des véhicules électriques identifiés pour atteindre les objectifs de charge ;
- commande de recharge des véhicules électriques selon une planification définie par lesdits calculs de durées de charge.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de gestion automatisée de compteurs électriques intelligents dans lequel la présente invention peut être implémentée ;
[Fig. 2] illustre schématiquement un algorithme de gestion de recharge de plusieurs véhicules électriques ;
[Fig. 3] illustre schématiquement un algorithme de recharge de plusieurs véhicules électriques, comme planifié en application de l'algorithme de la Fig. 2 ; et
[Fig. 4] illustre schématiquement un exemple de plateforme matérielle permettant d'implémenter, sous forme de circuiterie électronique, un contrôleur de station de recharge de véhicules électriques.

### EXPOSE DETAILLE DE MODES DE REALISATION

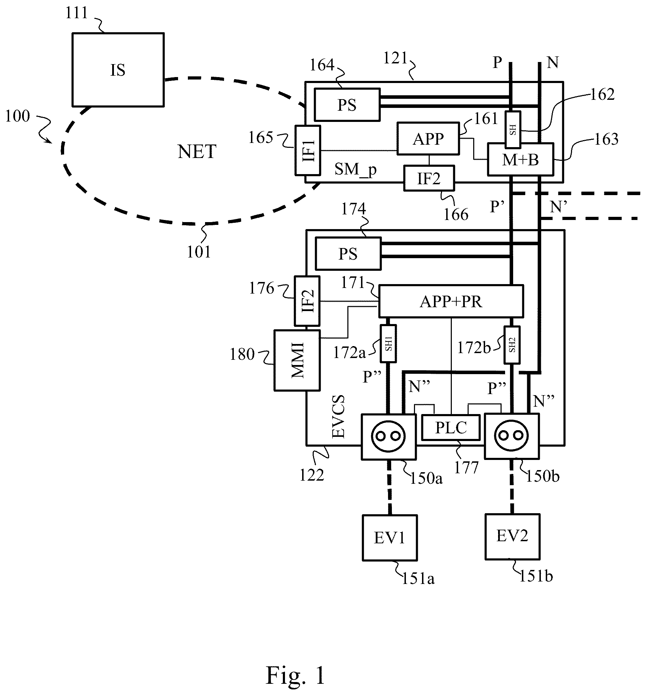

La Fig. 1 illustre schématiquement un système de gestion automatisée 100 de compteurs électriques intelligents 121 dans lequel la présente invention peut être implémentée.

Le système de gestion automatisée 100 est configuré pour réaliser une collecte de données de consommation électriques issues de mesures effectuées par les compteurs électriques intelligents 121.

Chaque compteur électrique intelligent SM 121 supervise la distribution électrique pour une installation électrique sur laquelle est potentiellement connecté, en aval du compteur électrique intelligent SM 121 par rapport au réseau électrique, une station de recharge de véhicules électriques EVCS 122. La station de recharge de véhicules électriques EVCS 122 est configurée pour la recharge de véhicules électriques EV1 151a, EV2 151b, connectés en parallèle les uns des autres, sur la station de recharge de véhicules électriques EVCS 122. Comme détaillé ci-après, la station de recharge de véhicules électriques EVCS 122 est configurée pour soit recharger simultanément les véhicules électriques EV1 151a, EV2 151b, soit recharger séquentiellement les véhicules électriques EV1 151a, EV2 151b, ou soit préférentiellement de permettre via une interface utilisateur de choisir de recharger simultanément ou séquentiellement les véhicules électriques EV1 151a, EV2 151b.

Les compteurs électriques intelligents SM 121 sont gérés à distance par un système d'information IS 111. La gestion à distance des compteurs électriques intelligents SM 121 par le système d'information IS 111, et notamment la relève d'informations de consommation électrique, s'effectue au travers d'un réseau de communication NET 101. Pour ce faire, chaque compteur électrique intelligent SM 121 dispose d'une interface de communication IF1 165 adaptée et configurée pour communiquer via le réseau de communication NET 101. Par exemple, le réseau de communication NET 101 est un réseau de communication sans-fil de type 5G (5^{e} Génération). Selon d'autres exemples, le réseau de communication NET 101 est un réseau de communication sans-fil de type GPRS (« General Packet Radio Service » en anglais), UMTS (« Universal Mobile Telecommunication System » en anglais), LTE-MTC (« Long-Term Evolution Machine Type Communication » en anglais) aussi connu sous le diminutif LTE-M, ou NB-IoT (« NarrowBand Internet of Things » en anglais). Selon encore un autre exemple, le réseau de communication NET 101 est un réseau de communication par courants porteurs en ligne PLC (« PowerLine Communications » en anglais), par exemple conforme au standard PRIME ou G3-PLC.

Chaque installation électrique est associée à un abonnement qui définit des conditions de distribution électrique à ladite installation électrique, par exemple des limites de puissance autorisée ou des conditions spécifiques de distribution électrique selon des plages horaires prédéterminées.

Dans une même installation électrique chez un abonné, le compteur électrique intelligent SM 121 est installé préalablement, typiquement par un agent d'un fournisseur d'électricité, directement sur l'arrivée électrique Phase P / Neutre N côté réseau électrique, et la station de recharge de véhicules électriques EVCS 122 est installée ultérieurement sur une alimentation électrique Phase P' / Neutre N' en sortie du compteur électrique intelligent SM 121, qui alimente typiquement aussi d'autres dispositifs électriques de l'installation électrique. La station de recharge de véhicules électriques EVCS 122 est typiquement installée à une distance du compteur électrique intelligent SM 121 qui permet de mettre en communication le compteur électrique intelligent SM 121 et la station de recharge de véhicules électriques EVCS 122 grâce à des interfaces de communication respectives IF2 166, 176. Etant donné que le compteur électrique intelligent SM 121 et la station de recharge de véhicules électriques EVCS 122 sont typiquement installés à proximité l'un de l'autre, les interfaces de communication IF2 166, 176 sont adaptées et configurées pour établir un lien de communication à courte portée, par exemple conformément aux spécifications de télérelève M-Bus (« Meter Bus » en anglais), telles que définies dans la norme EN 13757-2, ou aux spécifications wM-Bus (« Wireless M-Bus » en anglais), telles que définies dans la norme EN 13757-4. D'autres technologies de communication à courte portée peuvent être utilisées, telles que Bluetooth, Wi-Fi, Zigbee, KNX, KNX-RF, RS485... Un appairage entre le compteur électrique intelligent SM 121 et la station de recharge de véhicules électriques EVCS 122 est préférentiellement réalisé au moment de la mise en service de la station de recharge de véhicules électriques EVCS 122.

Chaque compteur électrique intelligent SM 121 comporte un dispositif d'alimentation interne PS 164 utilisé pour alimenter électriquement, à partir de la Phase P et du Neutre N, des éléments internes du compteur électrique intelligent SM 121. Outre l'interface de communication IF1 165 et l'interface de communication IF2 166, ces éléments internes du compteur électrique intelligent SM 121 incluent une fonction applicative APP 161, par exemple exécutée par un processeur muni d'une mémoire ou implémentée par un composant électronique dédié, configurée pour contrôler le compteur électrique intelligent SM 121, notamment dans le cadre de la relève d'informations de consommation électrique. Les éléments internes du compteur électrique intelligent SM 121 incluent en outre une fonction de métrologie équipée d'un organe de coupure (breaker) 163 (notée M+B sur la Fig. 1) qui effectue des mesures de consommation électrique de l'installation électrique supervisée par le compteur électrique intelligent SM 121 en question. L'organe de coupure (breaker) du compteur électrique intelligent SM 121 permet au système d'information IS 111 de sélectivement autoriser ou inhiber l'alimentation électrique de l'installation électrique supervisée par le compteur électrique intelligent SM 121.

La consommation électrique de l'installation électrique est mesurée grâce à un shunt SH 162 installé en entrée du compteur électrique intelligent SM 121 (Phase P, après la prise d'alimentation du dispositif d'alimentation interne PS 164 dudit compteur électrique intelligent SM 121), et des mesures de tension à ses bornes permettent d'obtenir une indication précise et qualifiée de la consommation électrique de l'installation électrique.

En sortie de la station de recharge de véhicules électriques EVCS 122, une alimentation électrique Phase P" / Neutre N" permet d'alimenter électriquement les véhicules électriques EV1 151a, EV2 151b par l'intermédiaire de connecteurs électriques respectifs 150a, 150b. Les connecteurs électriques 150a, 150b permettent ainsi de connecter simultanément plusieurs véhicules électriques EV1 151a, EV2 151b.

Dans un mode de réalisation particulier, les connecteurs électriques 150a, 150b sont des prises de type T2. Sur la Fig. 1, deux connecteurs électriques 150a, 150b sont représentés de maniére illustrative ; la station de recharge de véhicules électriques EVCS 122 peut toutefois comporter un plus grand nombre de connecteurs électriques pour permettre de connecter un tel plus grand nombre de véhicules électriques.

Il convient de noter que le compteur électrique intelligent SM 121 peut être un compteur polyphasé et la station de recharge de véhicules électriques EVCS 122 être alimentée par une seule des phases d'alimentation électrique fournies par le compteur électrique intelligent SM 121. En variante, la station de recharge de véhicules électriques EVCS 122 peut être alimentée par plusieurs phases d'alimentation électrique fournies par le compteur électrique intelligent SM 121 afin de permettre la recharge des véhicules électriques sur des phases différentes.

La station de recharge de véhicules électriques EVCS 122 comporte un dispositif d'alimentation interne PS 174 utilisé pour alimenter électriquement, à partir de la Phase P' et du Neutre N', des éléments internes de la station de recharge de véhicules électriques EVCS 122. Outre l'interface de communication IF2 176, ces éléments internes de la station de recharge de véhicules électriques EVCS 122 incluent une fonction applicative et de relais de puissance (notée APP+PR sur la Fig. 1) 171, exécutée par un contrôleur et configurée pour contrôler la station de recharge de véhicules électriques EVCS 122 et la recharge sélective des véhicules électriques EV1 151a, EV2 151b.

La station de recharge de véhicules électriques EVCS 122 comporte une interface de communication avec les véhicules électriques EV1 151a, EV2 151b. Préférentiellement, cette interface de communication est de type courants porteurs en ligne PLC (« PowerLine Communications » en anglais) 177. Dans un mode de réalisation particulier, cette interface de communication est de type courants porteurs en ligne PLC 177 et est adaptée pour que la station de recharge de véhicules électriques EVCS 122 dialogue avec les véhicules électriques EV1 151a, EV2 151b via la broche CP des prises T2 conformément au standard IEC 15118-2. Auquel cas, les véhicules électriques EV1 151a, EV2 151b disposent également de la capacité de dialoguer via la broche CP de la prise T2.

Cette interface de communication 177 permet à la station de recharge de véhicules électriques EVCS 122 de récupérer, auprès des véhicules électriques EV1 151a, EV2 151b des informations représentatives d'un niveau de charge actuel et de courant de charge, telles que des informations de capacité de charge (*e.g.,* en W.h), de recharge nécessaire pour atteindre la pleine capacité de charge (*e.g.,* en W.h), etc.

La station de recharge de véhicules électriques EVCS 122 comporte une interface homme machine MMI 180 permettant à un utilisateur de saisir des informations, telles que des objectifs de charge, et d'afficher à l'utilisateur des informations, telles qu'un score d'impact de charge.

Dans un mode de réalisation particulier, la station de recharge de véhicules électriques EVCS 122 comporte, sur chaque phase P" destinée à alimenter électriquement un dit connecteur électrique 150a, 150b, un shunt respectif SH1 172a, SH2 172b. Des mesures de tension à leurs bornes permettent d'obtenir une indication précise et qualifiée de la consommation électrique de la recharge du véhicule électrique EV1 151a, EV2 151b concerné. Cela permet à la station de recharge de véhicules électriques EVCS 122 de s'assurer que la recharge du véhicule électrique EV1 151a, EV2 151b concerné est effectivement en cours lorsque celle-ci est souhaitée et de remonter une alarme utilisateur dans le cas contraire.

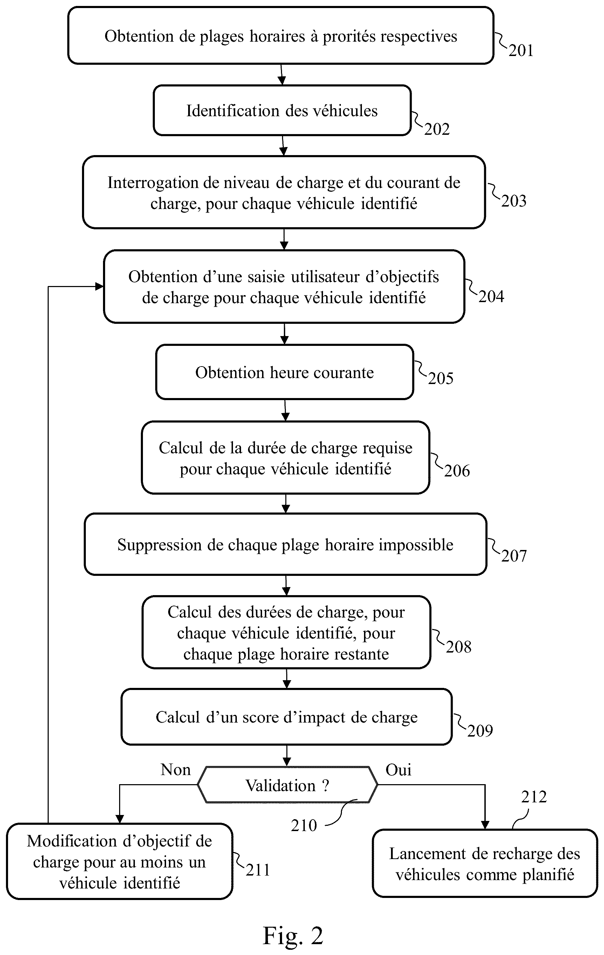

La fonction applicative et de relais de puissance APP+PR 171 est configurée pour gérer la recharge des véhicules électriques EV1 151a, EV2 151b en fonction d'objectifs de charge indiqués via l'interface homme machine MMI 180 et en tenant compte des priorités d'utilisation des plages horaires. Cet aspect est détaillé ci-après en relation avec la Fig. 2.

La Fig. 2 illustre schématiquement un algorithme de gestion de recharge de plusieurs véhicules électriques.

Dans une étape 201, la station de recharge de véhicules électriques EVCS 122 obtient une information représentative de plages horaires à priorités respectives. En d'autres termes, le temps est décomposé en plages horaires (*Tj* avec *j=1,...,m* pour *m* plages horaires au total de durées respectives *DTj*) et chacune de ces plages horaires à une priorité associée *Pj.* La priorité *Pj* de chaque plage horaire *Tj* (*j=1,...,m*) est associée à un score d'impact de charge *STj.* Plus la priorité est élevée, moins le score d'impact de charge est élevé ; et plus la priorité est basse, plus le score d'impact de charge est élevé. Le score d'impact de charge *STj* représente une amplitude d'impact d'une consommation électrique pendant la plage horaire *Tj* en question, typiquement sur le réseau électrique ou simplement sur l'installation électrique. La station de recharge de véhicules électriques EVCS 122 va donc chercher à réaliser en priorité les recharges de véhicules électriques sur des plages horaires *Tj* à plus faible score d'impact de charge *STj.*

Par exemple, quatre plages horaires T1 (de 22h à 7h), T2 (de 10h à 18h), T3 (de 7h à 10h) et T4 (de 18h à 22h) sont définies avec des scores d'impact de charge respectifs ST1, ST2, ST3 et ST4 tels que ST1 < ST2 <ST3 < ST4 (impliquant des priorités respectives P1, P2, P3 et P4 telles que P1 > P2 > P3 > P4).

Dans une étape 202, la station de recharge de véhicules électriques EVCS 122 identifie les véhicules électriques EV1 151a, EV2 151b connectés aux connecteurs électriques 150a, 150b (*n* > *1* véhicules électriques connectés). La station de recharge de véhicules électriques EVCS 122 utilise l'interface de communication 177 pour interroger les véhicules électriques EV1 151a, EV2 151b effectivement connectés aux connecteurs électriques 150a, 150b.

Dans une étape 203, la station de recharge de véhicules électriques EVCS 122 interroge chacun des véhicules électriques EV1 151a, EV2 151b concernant leur niveau de charge (*Ci_{INIT},* avec *i=1,...,n*) respectif et leur courant de charge (*Ii,* avec *i=1,...,n*) respectif.

Dans une étape 204, la station de recharge de véhicules électriques EVCS 122 obtient, via l'interface homme machine MMI 180, une saisie utilisateur d'objectifs de charge pour chaque véhicule électrique EV1 151a, EV2 151b. Les objectifs de charge sont représentatifs d'un objectif de niveau de charge à atteindre *Ci_{FINAL}* (avec *i=1,...,n*) à un horaire cible *Hi* (avec *i=1,...,n*), pour chaque véhicule électrique identifié.

Dans une étape 205, la station de recharge de véhicules électriques EVCS 122 obtient une information d'heure courante *Hc.* Par exemple, la station de recharge de véhicules électriques EVCS 122 est équipée d'une horloge interne. Dans un autre exemple, la station de recharge de véhicules électriques EVCS 122 interroge le compteur électrique intelligent SM 121, qui dispose d'une horloge interne, afin de connaître l'heure courante à chaque fois que nécessaire.

Dans une étape 206, la station de recharge de véhicules électriques EVCS 122 calcule la durée *Di* de charge requise, pour chaque véhicule électrique *i* (*i = 1,..,n*)*,* afin d'atteindre les objectifs de charge pour ledit véhicule électrique *i* en question. La durée *Di* de charge requise est calculée de la façon suivante : $Di = \frac{{Ci}_{FINAL} - {Ci}_{INIT}}{U \times Ii}$

Où U est la tension secteur de l'alimentation électrique de l'installation électrique (e.g., 230V en Europe et 110V aux Etats-Unis d'Amérique.

Dans une étape 207, la station de recharge de véhicules électriques EVCS 122 supprime, pour chaque véhicule électrique *i* (*i = 1,..,n*)*,* toute plage horaire inapplicable au regard de l'heure courante *Hc* et de l'horaire cible *Hi* précisé dans les objectifs de charge pour le véhicule électrique *i* en question. Par exemple, en considérant les plages horaires T1, T2, T3 et T4 susmentionnées, en considérant en outre qu'il est 20h et que l'horaire cible précisé dans les objectifs de charge de tous les véhicules électriques EV1 151a, EV2 151b est 8h, alors la plage horaire T2 (de 10h à 18h) est impossible d'utilisation et est supprimée de la gestion de charge en vue d'atteindre les objectifs de charge fixés par l'utilisateur.

Ainsi, si aucune charge n'est possible pour le véhicule électrique *i* pendant la plage horaire *Tj,* alors la durée maximale de charge pour le véhicule électrique *i* pendant la plage horaire *Tj* est *XiTjₘₐₓ =* 0, et sinon *XiTjₘₐₓ* = min (*Di ; DTj*)*.*

En variante, on peut remplacer *DTj* dans l'égalité ci-dessus par *DTj_i* (avec *DTj_i* ≤ *DTj),* où *DTj_i* est la durée maximale dans la plage horaire *Tj* pendant laquelle le véhicule électrique *i* peut être chargé, en tenant compte du fait qu'il est possible que le véhicule électrique *i* ne puisse pas bénéficier de toute la durée *DTj* de la plage horaire *Tj* pour y être chargé car le véhicule électrique *i* sera peut-être déconnecté de la station de recharge de véhicules électriques EVCS 122 pendant une partie de la période *Tj* associée, lié à la période de présence dudit véhicule électrique *i* au domicile de l'abonné pendant ladite période *Tj.* Notamment, *DTj_i* est égal à la durée restante de la plage horaire *Tj* au-delà de l'heure courante *Hc,* lorsque l'heure courante *Hc* est incluse dans la plage horaire *Tj.* Notamment aussi, *DTj_i* est égal à la durée entre le début de la plage horaire *Tj* et l'horaire cible *Hi* dans les objectifs de charge pour le véhicule électrique *i* en question, lorsque ledit horaire cible *Hi* est inclus dans la plage horaire *Tj.*

Dans une étape 208, la station de recharge de véhicules électriques EVCS 122 effectue des calculs de durées de charge, pour chaque véhicule électrique EV1 151a, EV2 151b, pour chaque plage horaire restante (*i.e.,* toute plage horaire pour laquelle *XiTjₘₐₓ* ≠ 0), en tenant compte des objectifs de charge pour chaque véhicule électrique EV1 151a, EV2 151b.

Les calculs de durées de charge tiennent compte de la possibilité, ou non, de recharger simultanément les véhicules électriques EV1 151a, EV2 151b. Une information indiquant si les recharges simultanées sont autorisées ou pas peut être configurée, en usine ou à l'installation, dans la station de recharge de véhicules électriques EVCS 122. La station de recharge de véhicules électriques EVCS 122 peut aussi en variante obtenir cette information de la part du compteur électrique intelligent SM 121, par exemple sur configuration du système d'information IS 111 en fonction de l'abonnement souscrit. Dans encore une autre variante, cette information peut être obtenue par sélection utilisateur grâce à une saisie via l'interface homme machine MMI 180.

Considérant que la recharge simultanée des véhicules électriques n'est pas autorisée, la station de recharge de véhicules électriques EVCS 122 calcule les durées de charge *XiTj,* pour chaque véhicule électrique *i,* et pour chaque plage horaire *Tj,* en tenant compte que la somme des durées de charge *XiTj,* avec *i=1,..,n,* pour tout *j=1,...,m,* n'excède pas la durée *DTj* de la plage horaire *Tj* en question, soit : ${\sum }_{i = 1}^{n} XiTj \leq DTj , pour tout j = 1 , … , m$

En tenant compte de cette contrainte, la station de recharge de véhicules électriques EVCS 122 calcule un jeu de durées de charge *XiTj,* pour chaque véhicule électrique *i,* et pour chaque plage horaire *Tj,* qui permette de minimiser un score total d'impact de charge *Stot,* tel que : $Stot = {\sum }_{j = 1}^{m} \left(\left({\sum }_{i = 1}^{n} \left(XiTj\times Ii\right)\right)\times STj\right)$
en maximisant l'expression suivante, pour chaque plage horaire *Tj,* en prenant les plages horaires dans leur ordre décroissant de priorité *Pj* (ou, de manière équivalente, leur ordre croissant de score d'impact de charge *STj*) : ${\sum }_{i = 1}^{n} \left(XiTj\times Ii\right)$
avec *XiTj* ≤ min(*XiTjₘₐₓ*; *Di)* sans recouvrement des périodes de charge.

Par exemple, un algorithme de programmation linéaire, tel que l'Algorithme du Simplexe, peut être utilisé pour ce faire.

Considérant que la recharge simultanée des véhicules électriques est autorisée, la station de recharge de véhicules électriques EVCS 122 calcule les durées de charge *XiTj,* pour chaque véhicule électrique *i,* et pour chaque plage horaire *Tj,* en tenant compte du fait que chaque durée de charge *XiTj,* avec *i=1,..,n,* pour tout *j=1,...,m,* n'excède pas la durée *DTj* de la plage horaire *Tj* en question.

En tenant compte de cette contrainte, la station de recharge de véhicules électriques EVCS 122 calcule un jeu de durées de charge *XiTj,* pour chaque véhicule électrique *i,* et pour chaque plage horaire *Tj,* qui permette de minimiser le score total d'impact de charge *Stot* susmentionné.

Dans un mode de réalisation particulier, la station de recharge de véhicules électriques EVCS 122 calcule les durées de charge *XiTj,* pour chaque véhicule électrique *i,* de sorte que $XiTj = min \left({XiTj}_{max};Di-{\sum }_{k \ Pk > Pj} XiTk\right)$
où *k* \ *Pk* > *Pj* signifie *k* tel que *Pk > Pj,*
ou de manière équivalente : $XiTj = min \left({XiTj}_{max};Di-{\sum }_{k \ STk > STj} XiTk\right)$
où *k* \ *STk* < *STj* signifie *k* tel que *STk < STj.*

Dans une étape 209, la station de recharge de véhicules électriques EVCS 122 calcule le score total d'impact de charge *Stot* et le présente à l'utilisateur via l'interface homme machine MMI 180.

Dans une étape 210, la station de recharge de véhicules électriques EVCS 122 attend une validation, ou un rejet, par le biais de l'interface homme machine MMI 180. Lorsque la validation est reçue, une étape 212 est effectuée ; sinon, lorsque le rejet est reçu, une étape 211 est effectuée.

Dans l'étape 211, la station de recharge de véhicules électriques EVCS 122 attend de nouveaux objectifs de charge, de sorte à réitérer les étapes 204 à 210 avec ces nouveaux objectifs de charge. L'utilisateur peut par exemple abaisser le niveau de charge *Ci_{FINAL}* attendu pour tel ou tel véhicule électrique *i*.

Dans l'étape 212, la station de recharge de véhicules électriques EVCS 122 commande la recharge des véhicules électriques EV1 151a, EV2 151b conformément à une planification qui respecte les calculs et les contraintes établis à l'étape 208.

Dans un mode de réalisation particulier, bien que la recharge simultanée des véhicules électriques soit autorisée, la station de recharge de véhicules électriques EVCS 122 calcule en premier lieu des durées de charge, pour chaque plage horaire *Tj* et pour chaque véhicule électrique *i* (*i=1,..,n*)*,* en évitant la recharge simultanée desdits véhicules électriques. Si les objectifs de charge peuvent ainsi être atteints, et si le score total d'impact de charge *Stot* résultant convient à l'utilisateur, cela entraîne la validation de la planification correspondante et les véhicules électriques sont ainsi rechargés sans recouvrement de leurs périodes de charge. Cela permet de limiter l'ampleur des sollicitations sur l'installation électrique et, d'une manière générale, sur le réseau d'alimentation électrique. Sinon, si les objectifs de charge ne peuvent pas être atteints sans autoriser la recharge simultanée des véhicules électriques, ou si le score total d'impact de charge *Stot* résultant ne convient pas à l'utilisateur, cela entraîne le rejet de la planification correspondante et la station de recharge de véhicules électriques EVCS 122 calcule alors des durées de charge, pour chaque plage horaire *Tj* et pour chaque véhicule électrique *i* (*i=1,..,n*)*,* en autorisant la recharge simultanée desdits véhicules électriques.

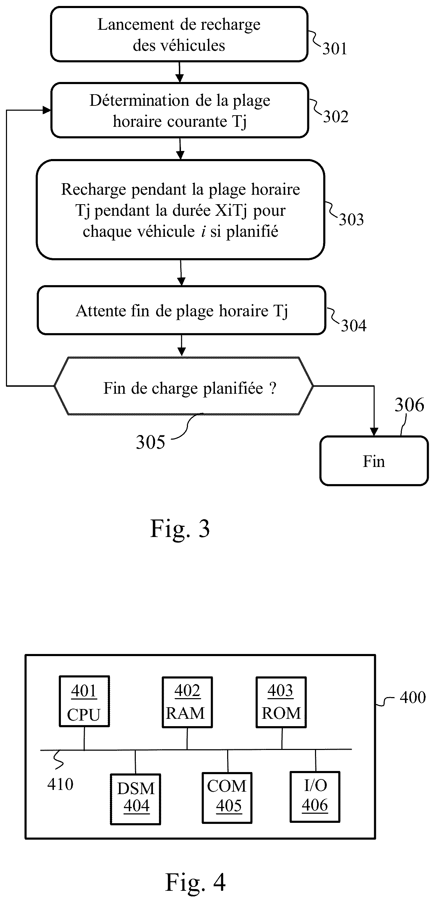

La Fig. 3 illustre schématiquement un algorithme de recharge de plusieurs véhicules électriques, comme planifié en application de l'algorithme de la Fig. 2.

Dans une étape 301, la station de recharge de véhicules électriques EVCS 122 lance la recharge de plusieurs véhicules suite à l'exécution de l'algorithme de la Fig. 2. Une planification a donc été établie en fonction d'objectifs de charge et des plages horaires *Tj* (*j = 1,..,m)*, pour chaque véhicule électrique *i* (*i=1,..,n*).

Dans une étape 302, la station de recharge de véhicules électriques EVCS 122 détermine quelle est la plage horaire courante *Tj.*

Dans une étape 303, la station de recharge de véhicules électriques EVCS 122 recharge pendant la plage horaire *Tj,* pendant la durée *XiTj,* pour chaque véhicule *i* qui a été planifié pour une recharge pendant ladite plage horaire *Tj.* Comme déjà indiqué, les recharges de plusieurs véhicules électriques pendant la plage horaire *Tj* peuvent être réalisées séquentiellement ou simultanément (période de recouvrement des recharges), selon la planification établie.

Lorsque dans une même plage horaire plusieurs véhicules électriques sont planifiés pour être rechargés séquentiellement, la station de recharge de véhicules électriques EVCS 122 peut recharger un premier véhicule électrique *i* jusqu'à écoulement de la durée *XiTj* correspondante avant de passer à la recharge d'un autre véhicule électrique *i' (i'=1,..,n* avec *i'* ≠ *i)* jusqu'à écoulement de la durée *Xi'Tj* correspondante.

En variante, la station de recharge de véhicules électriques EVCS 122 peut recharger les véhicules électriques *i* et *i'* en alternance jusqu'à écoulement des durées *XiTj* et *Xi'Tj* respectivement. Cela permet à chacun des véhicules électriques *i* et *i'* de bénéficier progressivement de la recharge, et donc d'avoir un plus haut niveau de charge si d'aventure un desdits véhicules électriques *i* et *i'* devait être débranché prématurément de la station de recharge de véhicules électriques EVCS 122.

Pour autoriser la recharge d'un dit véhicule électrique EV1 151a, EV2 151b, la station de recharge de véhicules électriques EVCS 122, par le biais de la fonction applicative et de relais de puissance APP+PR 171, ferme un relais de sorte à alimenter électriquement la phase P" du connecteur électrique 150a, 150b correspondant. Pour tout véhicule électrique EV1 151a, EV2 151b ne devant pas être rechargé à ce moment-là, la station de recharge de véhicules électriques EVCS 122, par le biais de la fonction applicative et de relais de puissance APP+PR 171, ouvre le relais correspondant de sorte à ne pas alimenter électriquement la phase P" du connecteur électrique 150a, 150b correspondant.

La Fig. 4 illustre schématiquement un exemple de plateforme matérielle permettant d'implémenter, sous forme de circuiterie électronique, le contrôleur de la station de recharge de véhicules électriques EVCS 122.

La plateforme matérielle comporte, reliés par un bus de communication 410 : un processeur ou CPU (« Central Processing Unit » en anglais) 401 ; une mémoire vive RAM (« Random-Access Memory » en anglais) 402 ; une mémoire morte 403, par exemple de type ROM (« Read Only Memory » en anglais) ou EEPROM (« Electrically-Erasable Programmable ROM » en anglais), telle qu'une mémoire Flash ; une unité de stockage, telle qu'un disque dur HDD (« Hard Disk Drive » en anglais) 404, ou un lecteur de support de stockage, tel qu'un lecteur de cartes SD (« Secure Digital » en anglais) ; et un gestionnaire d'interfaces de communication COM 405 ; et un gestionnaire d'entrées/sorties I/O 406.

Le gestionnaire d'interfaces COM 405 permet à la station de recharge de véhicules électriques EVCS 122 d'interagir avec d'autres équipements par le biais des interfaces de communication 176, 177.

Le gestionnaire d'entrées/sorties I/O 406 permet à la station de recharge de véhicules électriques EVCS 122 d'ouvrir et de fermer, sélectivement, des relais d'alimentation électrique des connecteurs électriques 150a, 150b.

Le processeur 401 est capable d'exécuter des instructions qui forment un programme d'ordinateur et qui sont chargées dans la mémoire vive 402 à partir de la mémoire morte 403, d'une mémoire externe, d'un support de stockage (tel qu'une carte SD), ou d'un réseau de communication. Lorsque la plateforme matérielle est mise sous tension, le processeur 401 est capable de lire de la mémoire vive 402 les instructions précitées et de les exécuter. Quand elles sont lues (depuis la mémoire vive 402 ou un support de stockage) et exécutées par le processeur 401, ces instructions (qui forment un programme d'ordinateur) entraînent l'exécution, par le processeur 401, de tout ou partie des étapes, procédés et fonctionnements décrits ici.

Tout ou partie des étapes, procédés et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, la station de recharge de véhicules électriques EVCS 122 comporte de la circuiterie électronique adaptée et configurée pour implémenter les fonctionnements, procédés et étapes décrits ici.

## Revendications

1. Un procédé de gestion de recharge de plusieurs véhicules électriques (151a, 151b) exécuté par une station de recharge de véhicules électriques (122) connectée en aval d'un compteur électrique intelligent (121), la station de recharge de véhicules électriques (122) comportant :
- une interface de communication (176) avec le compteur électrique intelligent (121) ;
- une interface de communication (177) avec les véhicules électriques (151a, 151b) ;
- une interface homme machine (180) ;
le procédé étant tel que la station de recharge de véhicules électriques (122) effectue les étapes suivantes :
- obtention (201), auprès du compteur électrique intelligent, de plages horaires associées respectivement à des scores d'impact de charge, chaque score d'impact de charge étant représentatif d'un impact de consommation électrique pendant la plage horaire en question ;
- identification des véhicules électriques (151a, 151b) connectés ;
- interrogation (203) du niveau de charge et du courant de charge des véhicules électriques identifiés (151a, 151b) ;
- obtention (204) d'une saisie utilisateur, par l'interface homme machine (180), d'un objectif de charge pour chacun des véhicules électriques identifiés (151a, 151b), l'objectif de charge étant représentatif d'un niveau de charge à atteindre à un horaire cible ;
- obtention d'une heure courante (205) ;
- calcul (206) d'une durée totale de charge requise, pour chaque véhicule électrique identifié (151a, 151b), pour atteindre le niveau de charge à atteindre et du courant de charge du véhicule électrique (151a, 151b) en question ;
- suppression (207), pour chaque véhicule électrique identifié (151a, 151b), de toute plage horaire inapplicable au regard de l'heure courante et de l'horaire cible pour le véhicule électrique (151a, 151b) en question ;
- calculs (208) de durées de charge, pour chaque véhicule électrique identifié (151a, 151b), pour chaque plage horaire restante, de sorte à minimiser un score total d'impact de charge de la recharge des véhicules électriques identifiés (151a, 151b) pour atteindre les objectifs de charge ;
- commande (212) de recharge des véhicules électriques (151a, 151b) selon une planification définie par lesdits calculs de durées de charge.

2. Le procédé selon la revendication 1, dans lequel la station de recharge de véhicules électriques (122) obtient une information indiquant si les recharges simultanées sont autorisées ou pas, et lesdits calculs des durées de charge, pour chaque véhicule électrique identifié, pour chaque plage horaire restante, tiennent compte de l'information indiquant si les recharges simultanées sont autorisées ou pas.

3. Le procédé selon la revendication 2, dans lequel l'information indiquant si les recharges simultanées sont autorisées ou pas est obtenue par saisie utilisateur par l'interface homme machine (180).

4. Le procédé selon la revendication 2 ou 3, dans lequel, lorsque les recharges simultanées sont autorisées, la station de recharge de véhicules électriques (122) effectue les étapes suivantes :
- calculer en premier lieu des durées de charge, pour chaque plage horaire et pour chaque véhicule électrique identifié, en évitant la recharge simultanée desdits véhicules électriques (151a, 151b) ;
- si les objectifs de charge peuvent ainsi être atteints, et si le score total d'impact de charge résultant convient à l'utilisateur, recharger les véhicules électriques (151a, 151b) sans recouvrement de leurs périodes de charge ;
- sinon, calculer les durées de charge, pour chaque plage horaire et pour chaque véhicule électrique identifié (151a, 151b), en autorisant la recharge simultanée desdits véhicules électriques (151a, 151b).

5. Le procédé selon l'une quelconque des revendications 2 à 4, dans lequel, pour des recharges simultanées non autorisées, la station de recharge de véhicules électriques (122) calcule les durées de charge *XiTj,* pour chaque véhicule électrique *i,* et pour chaque plage horaire *Tj,* en tenant compte que la somme des durées de charge *XiTj,* avec *i=1,..,n,* pour tout *j=1, ...,m,* n'excède pas la durée *DTj* de la plage horaire *Tj* en question, soit : ${\sum }_{i = 1}^{n} XiTj \leq DTj , pour tout j = 1 , … , m$
en maximisant l'expression suivante, pour chaque plage horaire *Tj,* en prenant les plages horaires dans leur ordre croissant de score d'impact de charge *STj :* ${\sum }_{i = 1}^{n} \left(XiTj\times Ii\right)$
avec *XiTj* ≤ min(*XiTjₘₐₓ*; *Di)* sans recouvrement des périodes de charge,
où *Ii* représente le courant de charge du véhicule électrique *i,*
où *XiTjₘₐₓ* est la durée maximale de charge pour le véhicule électrique *i* pendant la plage horaire *Tj,* avec *XiTjₘₐₓ =* 0 pour chaque plage horaire inapplicable pour le véhicule électrique *i,* et sinon *XiTjₘₐₓ* = min *(Di ; DTj)* sinon,
et où *Di* est ladite durée totale de charge requise pour le véhicule électrique *i.*

6. Le procédé selon l'une quelconque des revendications 2 à 4, dans lequel, pour des recharges simultanées non autorisées, la station de recharge de véhicules électriques (122) calcule les durées de charge *XiTj,* pour chaque véhicule électrique *i,* et pour chaque plage horaire *Tj,* en tenant compte que la somme des durées de charge *XiTj,* avec *i=1,..,n,* pour tout *j=1,...,m,* n'excède pas la durée *DTj* de la plage horaire *Tj* en question, soit : ${\sum }_{i = 1}^{n} XiTj \leq DTj , pour tout j = 1 , … , m$
en maximisant l'expression suivante, pour chaque plage horaire *Tj,* en prenant les plages horaires dans leur ordre croissant de score d'impact de charge *STj :* ${\sum }_{i = 1}^{n} \left(XiTj\times Ii\right)$
avec *XiTj* ≤ min(*XiTjₘₐₓ*; *Di)* sans recouvrement des périodes de charge,
où *Ii* représente le courant de charge du véhicule électrique *i,*
où *XiTjₘₐₓ* est la durée maximale de charge pour le véhicule électrique *i* pendant la plage horaire *Tj,* avec *XiTjₘₐₓ =* 0 pour chaque plage horaire inapplicable pour le véhicule électrique *i,* et sinon *XiTjₘₐₓ* = min *(Di ; DTj_i)* sinon,
où *DTj* est la durée de la plage horaire *Tj* et *Di* est ladite durée totale de charge requise pour le véhicule électrique *i*,
et où *DTj_i* est la durée maximale dans la plage horaire *Tj* pendant laquelle le véhicule électrique *i* peut être chargé.

7. Le procédé selon l'une quelconque des revendications 2 à 6, dans lequel, pour des recharges simultanées autorisées, la station de recharge de véhicules électriques (122) calcule les durées de charge *XiTj,* pour chaque véhicule électrique *i,* de sorte que $XiTj = min \left({XiTj}_{max};Di-{\sum }_{k \ STk < STj} XiTk\right)$
où *XiTjₘₐₓ* est la durée maximale de charge pour le véhicule électrique *i* pendant la plage horaire *Tj,* avec *XiTjₘₐₓ =* 0 pour chaque plage horaire inapplicable pour le véhicule électrique *i,* et sinon *XiTjₘₐₓ* = min *(Di ; DTj)* sinon,
où *DTj* est la durée de la plage horaire *Tj* et *Di* est ladite durée totale de charge requise pour le véhicule électrique *i*,
et où *k* \ *STk* < *STj* signifie *k* tel que *STk < STj,* où *STj* représente le score d'impact de charge associé à la plage horaire *Tj.*

8. Le procédé selon l'une quelconque des revendications 2 à 6, dans lequel, pour des recharges simultanées autorisées, la station de recharge de véhicules électriques (122) calcule les durées de charge *XiTj,* pour chaque véhicule électrique *i,* de sorte que $XiTj = min \left({XiTj}_{max};Di-{\sum }_{k \ STk < STj} XiTk\right)$
où *XiTjₘₐₓ* est la durée maximale de charge pour le véhicule électrique *i* pendant la plage horaire *Tj,* avec *XiTjₘₐₓ =* 0 pour chaque plage horaire inapplicable pour le véhicule électrique *i,* et sinon *XiTjₘₐₓ* = min *(Di ; DTj_i)* sinon,
où *Di* est ladite durée totale de charge requise pour le véhicule électrique *i,*
où *DTj_i* est la durée maximale dans la plage horaire *Tj* pendant laquelle le véhicule électrique *i* peut être chargé,
et où *k* \ *STk* < *STj* signifie *k* tel que *STk < STj,* où *STj* représente le score d'impact de charge associé à la plage horaire *Tj.*

9. Le procédé selon l'une quelconque des revendications 1 à 8, dans lequel la station de recharge de véhicules électriques (122) comportant un shunt (172a, 172b) sur chaque phase destinée à alimenter électriquement un connecteur électrique (150a, 150b) sur lequel est branché un dit véhicule électrique (151a, 151b), la station de recharge de véhicules électriques (122) assure par mesure de consommation électrique grâce au shunt (172a, 172b) que la recharge du véhicule électrique (151a, 151b) concerné est effectivement en cours lorsque la recharge est souhaitée et remonte une alarme utilisateur dans le cas contraire.

10. Un produit programme d'ordinateur, comportant des instructions entraînant l'exécution, par un processeur, du procédé selon l'une quelconque des revendications 1 à 9, lorsque lesdites instructions sont exécutées par le processeur.

11. Un support de stockage, stockant un programme d'ordinateur comportant des instructions entraînant l'exécution, par un processeur, du procédé selon l'une quelconque des revendications 1 à 9, lorsque lesdites instructions sont lues depuis le support de stockage et exécutées par le processeur.

12. Une station de recharge de véhicules électriques (122) qui est configurée pour recharger plusieurs véhicules électriques (151a, 151b) et qui est destinée à être connectée en aval d'un compteur électrique intelligent (121), la station de recharge de véhicules électriques (122) comportant :
- une interface de communication (176) avec le compteur électrique intelligent (121) ;
- une interface de communication (177) avec les véhicules électriques (151a, 151b) ;
- une interface homme machine (180) ;
la station de recharge de véhicules électriques (122) comportant de la circuiterie électronique configurée pour effectuer les étapes suivantes :
- obtention (201), auprès du compteur électrique intelligent (121), de plages horaires associées respectivement à des scores d'impact de charge, chaque score d'impact de charge étant représentatif d'un impact de consommation électrique pendant la plage horaire en question ;
- identification (202) des véhicules électriques (151a, 151b) connectés ;
- interrogation (203) du niveau de charge et du courant de charge des véhicules électriques identifiés (151a, 151b) ;
- obtention (204) d'une saisie utilisateur, par l'interface homme machine (180), d'un objectif de charge pour chacun des véhicules électriques identifiés (151a, 151b), l'objectif de charge étant représentatif d'un niveau de charge à atteindre à un horaire cible ;
- obtention (205) d'une heure courante ;
- calcul (206) d'une durée totale de charge requise, pour chaque véhicule électrique identifié (151a, 151b), pour atteindre le niveau de charge à atteindre et du courant de charge du véhicule électrique (151a, 151b) en question ;
- suppression (207), pour chaque véhicule électrique identifié (151a, 151b), de toute plage horaire inapplicable au regard de l'heure courante et de l'horaire cible pour le véhicule électrique (151a, 151b) en question ;
- calculs (208) de durées de charge, pour chaque véhicule électrique identifié (151a, 151b), pour chaque plage horaire restante, de sorte à minimiser un score total d'impact de charge de la recharge des véhicules électriques identifiés (151a, 151b) pour atteindre les objectifs de charge ;
- commande (212) de recharge des véhicules électriques (151a, 151b) selon une planification définie par lesdits calculs de durées de charge.
